# EUROPEAN PATENT SPECIFICATION

(11) **EP 0 392 847 B1**
(45) Date of publication and mention of the grant of the patent: **12.07.1995**
(21) Application number: 90303962.6
(22) Date of filing: 11.04.1990
(51) Int. Cl.: B32B 27/00, C08J 5/12, C09J 5/08, B29D 9/00

(54) **Molded article adapted to be adhered to a substrate and method for making same**
Geformter Gegenstand, angepasst um an ein Substrat befestigt zu werden und Verfahren zu seiner Herstellung
Article moulé prévu pour adhérer à un substrat et méthode de production

(30) Priority: 12.04.1989 US 336855
(43) Date of publication of application: 17.10.1990
(73) Proprietor: MINNESOTA MINING AND MANUFACTURING COMPANY, St. Paul, Minnesota 55133-3427 (US)
(72) Inventor: Janssen, Jeffrey R., C/o Minnesota Mining and, St. Paul, Minnesota 55133-3427 (US); Hill, Barbara A., C/o Minnesota Mining and, St. Paul, Minnesota 55133-3427 (US)
(74) Representative: Baillie, Iain Cameron

(56) References cited:
- WO-A-87/05563
- US-A- 3 501 564
- US-A- 4 612 249

## Description

### Field of Invention

The present invention relates to a molded three-dimensional article, e.g., useful as a decorative article, adapted to be bonded to a substrate and a method for making such articles.

### Background

Three-dimensional articles, e.g., decorative articles, are commonly adhered to a substrate, e.g., an automobile body panel, by one of two means, adhesives or mechanical fasteners. When mechanical fasteners which penetrate the substrate, e.g., clips, screws, or pins, are used they have often proven expensive. This is due to the cost of the fasteners and to the cost of the labor needed for precision penetration of the substrate and attachment of the mechanical fasteners to both the substrate and the article being attached. The action of penetrating the substrate may also increase the susceptibility of the substrate to damage, e.g., rust. Further, it typically tends to be difficult to use such fasteners where very thin articles are desired, or where such articles involve fine details.

When liquid adhesives have been used on the articles of the prior art, problems have arisen with correct placement of the article on the substrate, and oozing of the adhesive onto the substrate area around the article and onto the article itself. Such oozing is unsightly, may mask the decorative or other functional features of the article, and may be difficult to remove without damage to the article and/or substrate.

Another form of adhesive which may be used is pressure-sensitive adhesives. While such adhesives may in some instances be resistant to the aforementioned problem of oozing, they may tend to be subject to cohesive failure at undesirably low loads or may tend to provide insufficiently strong bonds to desired substrates. Large size decorative body side moldings which are adhered to the side of a fender on an automobile will be subject to a constant stress to gravity which often leads to cohesive failure of the bond and separation of the decorative article from the substrate.

Another means for adhering three-dimensional articles to a substrate is foam adhesive tapes. Foam adhesive tapes, however, may not be compatible with some articles. For instance, it may be difficult to obtain a high performance bond between urethane articles and acrylic-based foam adhesive tapes. Accordingly, such articles may undesirably tend to separate from such adhesive tapes, resulting in failure of the article and thereby not providing the high performance bond between article and adhesive tape which is required.

U.S. Patent No. 3,501,564 (Snoeyenbos et al.) discloses the formation of a bonding layer on the surface of a resin article, e.g., polyurethane article, wherein the bonding layer provides compatibility with adhesive materials. The patent teaches that the bonding layer is formed by applying a layer of material to a mold, applying curable composition thereover, and curing. The article is then removed from the mold and the bonding layer cleaned of parting agent, following which adhesive means may be bonded to the bonding layer in a subsequent process.

There are many applications in which a three-dimensional decorative article or a two-dimensional graphic is adhered to a substrate to provide ornamentation or identification. Such articles are attached to a myriad of items such as novelties, e.g., key chains and coffee mugs, appliances, e.g., vacuum cleaners, sports equipment, and automobiles, in both interior and exterior locations. These articles are typically formed of plastic or plastic-metal composites, and may be purely ornamental or they may identify the manufacturer or type of the item, e.g., "TURBO" legends on automobiles.

Three-dimensional articles have been produced by providing an indicia-bearing substrate, and providing a transparent polymeric lens disposed over the indicia bearing substrate. A curable liquid resin is typically applied over the indicia-bearing substrate to form a clear meniscus that becomes a clear polymeric lens when cured. For example, see U.S. Patents No. 4,100,010 (Waugh), 4,139,654 (Reed), 4,332,074 (Auld et al).

Previous attempts at providing ornamentation or identification have also included individually injection-molded or die-cast articles, made from plastic, zinc, aluminum, and the like. These articles are frequently decorated by use of metal plating, sputtering, and/or painting. These varied separate steps often render the resultant articles too expensive for attachment to moderately priced products.

Two-dimensional graphics are often substituted for the three-dimensional articles described above. These are generally provided in the form of flat polymeric films cut into a desired shape (decals) and applied to a substrate with an adhesive. Such flat graphics are suitable for some applications, but do not provide the three-dimensional appearance or benefits desired for many applications, e.g., decals are easily obscured by even a light layer of soil.

### Summary of Invention

The present invention provides novel three-dimensional molded polyurethane articles adapted to be adhered to a substrate and a novel process for making such articles. In some embodiments, the articles provided herein can be used as decorative articles which may possess a variety of aesthetically appealing appearances as desired and may be made in a wide variety of desired shapes or contours. In some embodiments, they are adapted to be bonded to a substrate with an adhesive body having specialized performance properties.

Briefly summarizing, the three dimensional articles provided herein comprise: 1) a cured polyurethane body having a major surface, referred to herein as a mounting surface, and which contains isocyanate functionalities; 2) a tie layer having a top and bottom major surface, which tie layer contains amine functionalities, the top major surface thereof being bonded to the mounting surface of the cured body; and 3) an adhesive body, at least the top stratum of which contains acid functionalities, adhered to the bottom major surface of the tie layer; wherein the cured body was cured with the tie layer and adhesive body in situ.

The bottom major surface of the tie layer presents a surface which is compatible with a variety of adhesive bodies, permitting selection of an adhesive body which provides desired performance characteristics. As described herein, the tie layer serves to provide means for securely bonding an adhesive body to the cured polyurethane body, particularly for bonding adhesive bodies which are incompatible for direct attachment to the cured body. The tie layer also provides means for protecting the cured body, the adhesive body, and the bond therebetween from deleterious effects due to components of the respective bodies which might otherwise interact to undesired effect. For instance, in some situations, residual monomers or other components in the cured bodies and the adhesives may react so as to form gasses such as carbon dioxide. For instance, many adhesives may contain water as a left over reaction component or absorbed from the atmosphere which may react undesirably with the isocyanate functionalities in the urethane body during or following curing and cause outgassing. Such outgassing may tend to cause weakening or even failure of a direct bond between the cured body and the adhesive body, and may tend to distort the shape of the cured body. Such outgassing may also tend to cause formation of bubbles within the adhesive body or between same and the substrate. Thus, in one aspect of the invention, the tie layer serves as a barrier between the cured body and the adhesive body.

As described below, the adhesive body may simply be a single layer of selected adhesive, e.g., a pressure-sensitive adhesive, or it may be more complex system which provides special performance criteria, e.g., a foam tape attachment system. In accordance with the present invention, the tie layer permits the use of certain high performance adhesive bodies which were previously incompatible with cured polyurethane bodies, e.g., because an effective bond could not be readily achieved or because of undesirable interactions therebetween.

In many instances, a three dimensional article as provided herein will further comprise an optional film, referred to herein as an integral film, which covers and is intimately bonded to at least part of the surface of the cured body. Integral films are typically of selected aesthetically desired appearance, e.g., of a desired color or pattern of colors. As used herein, "three dimensional" refers to the fact that the graphics provided herein have perceptible size and substance in the three spatial axes, i.e., X, Y, and Z axes. In some embodiments, articles of the invention may be quite thin in appearance, e.g., having a depth or thickness of only a few mils, but such articles are considered three dimensional for the purposes of the present invention. The ability to select and define the shape and contour of articles of the invention in three dimensions permits many aesthetically desirable effects to be attained.

The three dimensional articles of the present invention are formed by a novel method which enables the formation of articles having a variety of desired shapes and contours by utilizing a molding process and which further enables the achievement of high adhesive performance. In brief summary, the novel method provided herein comprises:
1) providing a mold having a desired contour defined by a shaping surface;
2) applying a curable urethane composition into the mold such that the composition flows to assume the contour defined by the shaping surface, the composition containing isocyanate functionalities; and
3) applying a tie layer having a top and bottom major surface over the applied curable composition with the top major surface of the tie layer being in contact with the curable composition, the tie layer containing amine functionalities;
4) placing an adhesive body in direct contact with the bottom major surface of the tie layer, the top stratum of the adhesive body containing acid functionalities; then
5) curing the composition with the tie layer and adhesive body in situ to form an article comprising a cured polyurethane body integrally bonded to the tie layer and adhesive body; and
6) demolding the article.
If desired, a film may be conformed to the shaping surface prior to application of the curable composition thereto such that the film becomes an integral element of the resultant three dimensional article, i.e., an integral film as described above. Such integral films may be utilized for a variety of aesthetic and functional purposes.

The novel method may further comprise, after removing the article from the mold, one or more optional steps such as: a) applying a clear coat composition to the front side of the integral film or cured body, b) applying a decorative image to the front side of the integral film or cured body, c) hot stamping the front side of the integral film or cured body, d) trimming the article to desired size or shape, e) applying a release liner to the bottom side of the article, and/or f) applying an application tape to the front surface of the article.

Another of the advantages provided by the novel articles and methods of the present invention is that the adhesive body is substantially in registration with the cured body of the article. In addition to providing what is typically considered a more aesthetically appealing appearance, because the adhesive body is in registration with the cured body the article tends to be less subject to collection of unsightly or deleterious foreign matter and to being "caught" or "picked" so as to be removed from the substrate than are articles wherein the registration of the adhesive is poorer. A further advantage provided herein is that a plurality of separate, i.e., not touching, articles may be conveniently formed and applied to a substrate in coordinated disposition, i.e., spaced in desired manner such as the letters in a word or name, without requiring that they be connected such as by an underlying character or by using script form.

### Brief Description of Drawing

The invention will be further explained with reference to the drawing, wherein:
Figure 1a is a cross-sectional illustration of a portion of one embodiment of a molded article of the invention;
Figure 1b is a cross-sectional illustration of a portion of another embodiment of a molded article of the invention which comprises an integral film bonded to the cured body;
Figure 2 illustrates an intermediate step in the method of the invention for making the molded article which is illustrated in Figure 1a;
Figures 3-5 illustrate different steps of illustrative embodiments of methods of the invention for making the molded article having an integral film as illustrated in Figure 1b;
Figure 6 is a cross-sectional illustration of a plurality of articles of the invention after optional trimming, optional printing of a decorative image, and application of an optional clear coat thereto;
Figure 7 is a cross-sectional illustration of a plurality of articles of the invention on a release carrier after an optional application tape has been applied thereto; and
Figure 8 is cross-sectional illustration of another embodiment of an integral film conformed to a mold during the method of the invention;
Figure 9 is a cross-sectional illustration of a portion of an embodiment of an article of the invention wherein the cured body has a non-planar mounting surface; and
Figure 10 is a cross-sectional illustration of an injection molding step in one embodiment of the method of the invention.

These figures, which are idealized, are not to scale and are intended to be merely illustrative and non limiting.

### Detailed Description of Illustrative Embodiments

One embodiment of an article of the invention is illustrated in Figure 1a wherein is shown article 100 which comprises cured body 112 having front surface 102 and mounting surface 116, with tie layer 18 having top major surface 20 and bottom major surface 22, top major surface 20 being bonded to mounting surface 116 of cured body 112. Adhesive body 24 is bonded to bottom major surface 22. In many instances, the bottom side of adhesive body 24 may be protected by an optional release liner (not shown).

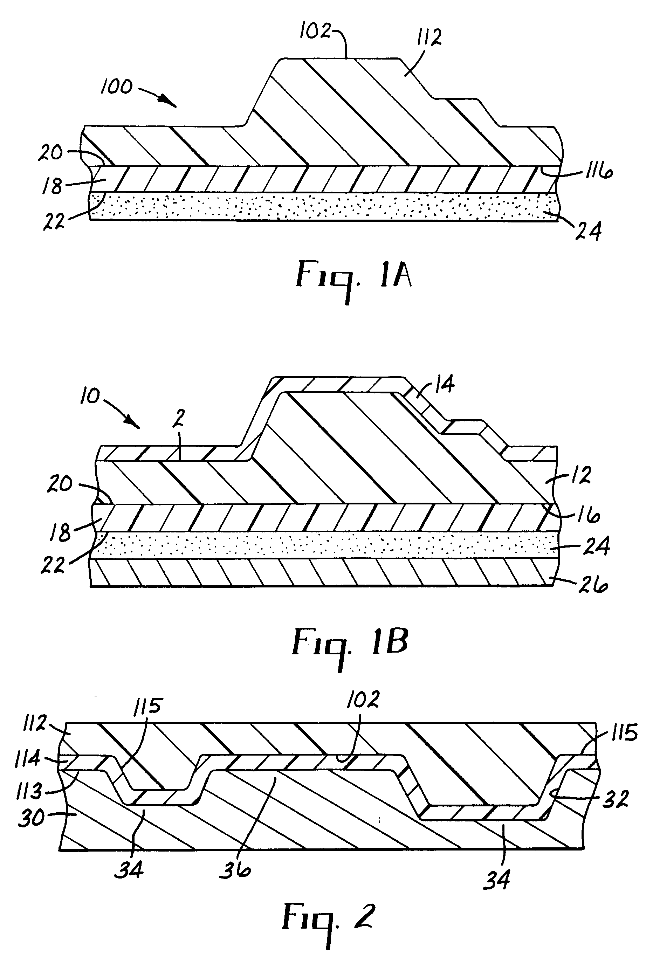

Another embodiment of the invention is illustrated in Figure 1b wherein is shown article 10 which comprises cured body 12, front surface 2 of which is covered in part by integral film 14 and mounting surface 16 of which is not covered by integral film 14, tie layer 18 having top major surface 20 and bottom major surface 22, top major surface 20 being bonded to mounting surface 16 of cured body 12. Adhesive body 24 is bonded to bottom major surface 22 of tie layer 18. In many instances, adhesive body 24 may be protected by optional release liner 26 prior to application to a substrate (not shown).

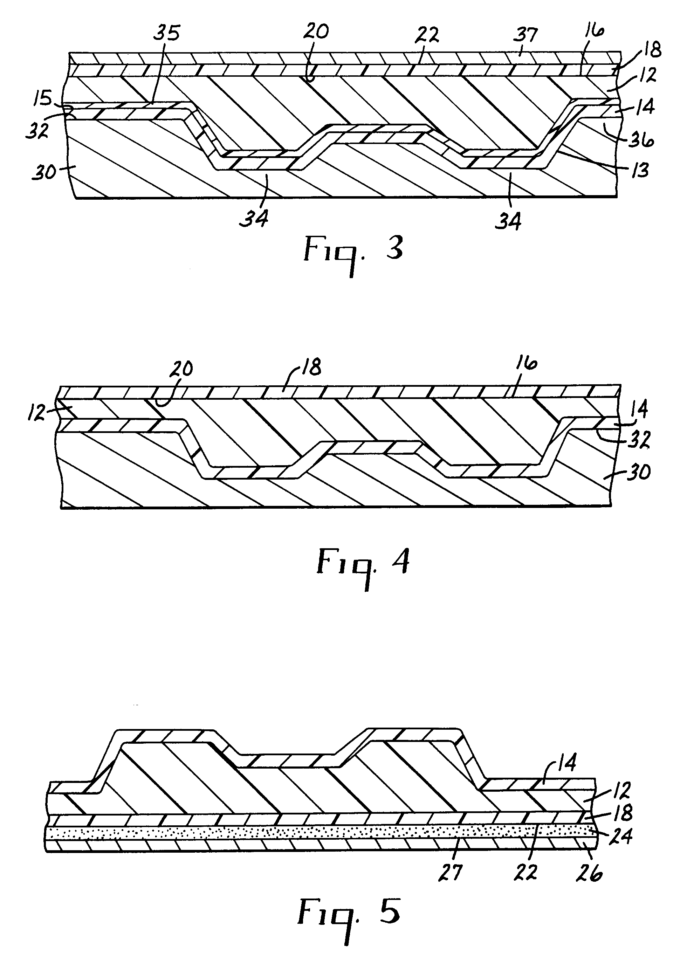

With reference to Figure 3, mold 30 is provided with shaping surface 32 of desired shape and contour. Typically, mold 30 is in a shape having one or more depressions or cavities 34 therein surrounded by relatively higher region(s) referred to herein as table(s) 36. Cavities 34, tables 36, and/or the overall forming boundary, i.e., dams or other boundary means (not shown) at the edges, of mold 30 may be of desired shape, e.g., rounded contour, having planar segments, combinations thereof, etc., and define shaping surface 32 of mold 30. For instance (not shown), a plurality of cavities in a mold may be in the shape of individual letters, e.g., T-U-R-B-O, surrounded by a table having an outside boundary which is oval in shape to produce a decorative article which is oval in shape and having the legend T-U-R-B-O raised in relief thereon. The cavities of a mold and/or the tables of a mold may be of varying heights, may have rounded or sharp edges, may be sloped, or have other contours in accordance with the shape desired of the resultant decorative article.

Integral film 14, which is thermoformable, is intimately conformed to desired shape with mold 30 utilizing known techniques, e.g., under pressure or vacuum, typically with moderate heating. Top side 13 of integral film 14 is in intimate contact with shaping surface 32 and back side 15 of integral film 14 is disposed or presented so as to be accessible for application of the curable composition thereto.

Typically, top side 13 of integral film 14 may tend to assume the surface features of shaping surface 32 of mold 30. Accordingly, shaping surface 32 of mold 30 should possess desired surface characteristics, e.g., a high gloss or matte finish, or have patterns therein to be imparted to top side 13.

As will be described below, after performing certain steps in fabrication of an article of the invention, the article will be removed from the mold, i.e., "demolded". Thus, shaping surface 32 should release from top side 13 of integral film 14 without damaging same, i.e., shaping surface 32 and integral film 14 should not stick so as to cause cohesive failure of integral film 14 or elsewhere in the article, or marring of top side 13. Mold 30, or at least shaping surface 32 thereof, may be made of material or materials which inherently exhibit desired release characteristics, e.g., in some instances Teflon coatings may be useful. As will be understood by those skilled in the art, in some instances (not shown), shaping surface 32 and/or top side 13 of integral film 14 may be treated, e.g., with the application of release agents such as silicone compositions or oils, to provide desired release properties.

Integral film 14, or at least top side 13 thereof, is typically of desired color or colors. Integral film 14 should be sufficiently conformable, i.e., sufficiently extensible and flexible, to be formed under heat and pressure into the desired contour. Typically, it will be preferred that the film be sufficiently conformable to assume the desired contour without being degraded, such as by cracking or stress whitening. The requisite degree of elongation and flexibility of a film are dependent in part upon the nature of the contour to which it to be formed. In some instances, films having an elongation of only about 15 percent or less will be useful whereas in other embodiments films having elongation of 200 percent or more will be required. Selection of a film having suitable elongation and flexibility to be formed to a particular contour may be readily determined by experiment.

Integral films used in the present invention may be formed by any known means, e.g., they may be cast from solution or extruded. However, substantially unoriented or lowly oriented cast films are typically preferred because it is believed that they are under less internal stress and are less likely to undergo shrinkage, particularly when heated, than are more highly oriented films. It is believed that some extruded films may tend to have been stretched sufficiently during their fabrication so as to be subject to a tendency to shrink.

Thinner integral films are typically more pliable and thus may typically be conformed to more finely detailed or more sharply defined contours than thicker films. In many instances, integral films used in the present invention will be between about 0.5 and 10 mils (12 and 250 microns) in thickness. It will be understood, however, that films having thicknesses outside that range may be used in accordance with the present invention.

In some instances, the integral films may be partially cross-linked. Such films can typically be formed only to contours having somewhat softer contours than films which are not cross-linked. Thus, cross-linked integral films may be used wherein the top side of the film has a coating or stratum which has limited extensibility, e.g., a thin coating of metal to provide a silvered or chromed appearance, because the cross-linked nature of the film will protect the coating thereon. Figure 8 illustrates a portion 210 of an illustrative embodiment of an article of the invention wherein integral film 214 comprises film base 260 and coating 262. Film base 260 is typically a partially cross-linked polymeric film having other properties similar to those of the integral films described above. Coating 262 is typically a thin coating of metal, e.g., silver or tin, or other decorative material of limited extensibility, i.e., typically only up to about 10 percent.

Integral films 14 used herein are typically preferably resistant to potentially damaging agents and conditions to which the resultant article is likely to be exposed. Thus, in the case of automotive applications, it is typically preferred that integral films 14 be resistant to damage or degradation by such fluids as gasoline, cleaning solutions, and water, by exposure to ambient temperatures and, in outdoor applications, to ultraviolet radiation, and that they be impact resistant, particularly at low temperatures, e.g., below 0°F (-20°C). In some instances they should also be capable of withstanding repeated expansion and contraction as the resultant article is exposed to cycles of hot and cold temperatures. Thus, integral films 14 will be selected and formulated in part based upon the properties desired of the film and the resultant article and the conditions to which they will be exposed.

Illustrative examples of films which may be useful as integral films in the present invention include plasticized polyvinyl chloride films, polyolefin films, thermoplastic rubber films, some acrylonitrile-butadiene-styrene/vinyl laminates, and ethylene/methacrylic acid copolymer films, such as the SURLYN Series available from E. I. du Pont de Nemours and Co.

Integral films 14 may be formulated to contain certain useful agents to provide or enhance desired properties. Illustrative examples of such agents include, but are not limited to, one or more of the following: plasticizers; protective agents, e.g., UV absorbers, antioxidants, stabilizers, etc.; colorants, e.g., pigments, dyes, etc.; reinforcing agents; fillers; fire retardants; etc. In addition, adhesion-promoting primes or other useful agents may be applied to back side 15 of film 14, or release agents or other useful agents may be applied to front side 13 of film 14.

After integral film 14 is conformed in mold 32, curable urethane composition 12 is applied to back side 15 of integral film 14. Back side 15 of integral film 14 should be such as to provide a strong bond with the body formed by curing curable composition 12, discussed below. Some integral films 14 will inherently exhibit desired compatibility therewith and others will require priming treatments, such as application of one or more priming agents thereto. Figure 3 illustrates prime layer 35 on back side 15 of integral film 14. As will be understood, selection of a prime treatment is based upon the particular integral film and curable composition being used. For instance, with many polyvinyl chloride films, a polyvinyl chloride/polyvinyl (PVC/PVA) acetate resin, e.g., VAGH available from Union Carbide, is a useful priming resin. Illustrative examples of other primes include DESMOLAC 4125 from Mobay Chemical Company and VMCH, a hydroxyl-terminated PVC/PVA resin from Union Carbide. Figure 4 illustrates an integral film 14 which will achieve the desired bond to cured body 12 without use of a prime layer.

In some embodiments such as illustrated in Figure 1a, molded articles of the invention can be made without integral films. In some of such instances, such molded articles may be formed by applying a curable composition directly to a mold. In many such instances, however, it will be desirable to apply a release treatment to the mold, apply a release agent thereto, or incorporate release-enhancement material(s) in the curable composition to facilitate removal of the cured body from the mold. For instance, as shown in Figure 2 it may be desired to apply release agent 114 to shaping surface 32 of mold 30. Release agent 114 should separate easily from cured body 112.

Referring again to Figure 3, after integral film 14 is conformed in mold 30 to the desired contour, curable composition 12 is applied to back side 15 thereof. In some embodiments of the invention, e.g., molded articles of the invention which are to be used as decorative articles for use on an automobile exterior, the preferred adhesive body is a foam attachment system. In such embodiments, the curable urethane composition preferably cures to form a hard, i.e., typically having a Shore D hardness of about 60 durometers or more, relatively rigid mass as decorative articles with such urethane bodies will typically exhibit optimum resistance to being curled and peeled from a substrate such as by abrasive forces as might be encountered in a car wash. In embodiments of the invention using simply one or more layers of conventional adhesive, i.e., non-foam adhesive embodiments as the adhesive body, the curable composition preferably forms a somewhat softer, i.e., a Shore D hardness of about 45 durometers, less rigid mass in order that the decorative article can be conformed to a substrate.

In articles having integral films 14, curable composition 12 should be compatible with back side 15 of integral film 14 so as to form a strong bond therewith. As mentioned above, back side 15 of integral film 14 may be primed to enhance the compatibility of curable composition 12 therewith. The need for such prime may depend in part upon the properties of selected curable composition 12 and of back side 15 of integral film 14. Alternatively, when the cured body is made without an integral film, the body preferably releases easily from the mold. For instance, as illustrated in Figure 2, release agent 114 is preferably such that front surface 102 of cured body 112 releases easily from back surface 115 thereof, either during or after demolding. Also it is typically preferred that front surface 113 of release agent 114 release from shaping surface 32 thereby facilitating reuse of mold 30.

Furthermore, the curable composition should cure to form a mass which will age well and is stable and resistant to degradation under expected conditions of temperature and exposure, e.g., to agents such as cleaning solvents, water, gasoline, etc., in automotive applications.

In many embodiments, for example where the molded article is to be used as a decorative article such as an automobile side body trim, the curable body is preferably a thermosetting material which is weather-, temperature-, and impact-resistant. If integral film 14 is not essentially opaque to ultraviolet ("UV") radiation, such as may be the case with thinner films used herein, the body is preferably also resistant to exposure to UV radiation such as may be encountered by sunlight. A number of plastics can be used for this purpose, but one which is particularly advantageous because it satisfies all the above needs is an impact-resistant polyurethane. One polyurethane useful in the present invention is the reaction product of polypropylene glycol and an aliphatic diisocyanate. In one embodiment, a relatively soft, flexible, weather-resistant polyurethane generally characterized by a Shore D hardness in the range of about 45 to about 65, preferably about 45 to about 55, is used. Such materials are well-known and various ones can be used in the invention. One that is particularly useful is the reaction product of (A) a mixture of a polyester glycol and low to medium molecular weight polypropylenetriols and (B) an aliphatic diisocyanate-polypropylenetriol adduct.

If desired, curable compositions used in molded articles of the invention may comprise fillers such as glass bubbles, e.g., having an average diameter of about 50 microns, or other reinforcing agents, e.g., fibrous materials. Other useful materials which can be blended into the curable composition include, but are not limited to, one or more of the following: colorants, e.g., pigments or dyes (particularly in embodiments wherein the molded article does not comprise an integral film); protective agents, e.g., UV absorbers, antioxidants, stabilizers, etc.; fire retardants; and viscosity adjusting agents.

Referring to Figure 3 again, curable composition 12 is applied to back side 15 of integral film 14, filling depressions 34 therein, and typically so as to flow over tables 36 so as to cover substantially all of back side 15 of integral film 14. The curable composition should have a viscosity suitable for handling during fabrication of the molded article. It has been found that curable compositions having a Brookfield viscosity of about 3000 to about 5000 centipoise may typically be conveniently worked with. Compositions having viscosities outside the indicated range can be used in the invention, however, those having substantially higher viscosities may tend to be too thick to handle conveniently, whereas those having substantially lower viscosities may tend to flow so easily as to cause messy working conditions.

After it is applied, curable composition 12 preferably wets the surface of back side 15 of integral film 14 to ensure that a strong bond develops thereto without any voids. To achieve such preferred wetting, the composition may have a sufficiently low viscosity to flow so as to wet the entire surface, or it may be channeled such as with a doctor blade. In some instances, tie layer 18 may be applied so as to cause the curable composition to wet the entire surface of the back side of the film. We have found that in many instances, molded articles wherein the cured thickness of the cured body is at least 3 mils (75 microns) in all places is useful. The thinnest portions of the cured body are typically over the table portions of the mold. There may, however, be other features in a desired contour which produce thinner portions in the cured body than are generally found over tables.

Typically, it is desired that mounting surface 16 of cured body 12 be substantially planar in order to optimize the bond of the resultant molded article to a desired substrate, especially where the surfaces to which the finished article is substantially planar. In the case of decorative articles, molded articles wherein the cured bodies have substantially planar mounting surfaces are commonly considered to provide the most aesthetically pleasing profile. This desired surface profile may be achieved in some instances by the inherent tendency of fluid curable composition 12 to flow to achieve a substantially flat surface before it cures. Furthermore, if tie layer 18 is applied such as by rolling with moderate pressure, or if after tie layer 18 is applied but before the curable composition is cured, a moderate pressure such as by a roller or flat plate is applied to bottom surface of tie layer 18, such as by roller, the flatness of resultant mounting surface 16 of cured body 12 is typically increased.

Figure 2 illustrates an intermediate assembly wherein integral film 114 has been conformed in mold 30 and curable composition 112 has been applied thereto.

Figure 3 illustrates an intermediate assembly wherein integral film 14 has been conformed in mold 30, curable composition 12 has been applied thereto, and tie layer 18 on temporary release liner 37 has been applied thereto. In Figure 4, release liner 37 has been removed and tie layer 18 is exposed in preparation for application of the adhesive body (not shown) thereto prior to curing of composition 12.

Following application of an adhesive body (not shown) to the bottom surface of tie layer 18, or alternatively the adhesive body and tie layer 18 may be applied to curable composition 12 in preassembled fashion, curable composition 12 is then cured with tie layer 18 and the adhesive body in situ. One of the advantages of the present invention is that curable composition 12 and tie layer 18 are compatible such that an exceptionally strong, in some instances essentially inseparable, bond can be achieved therebetween. Other advantages include that curing and providing means for adherence to a substrate are achieved in a single process.

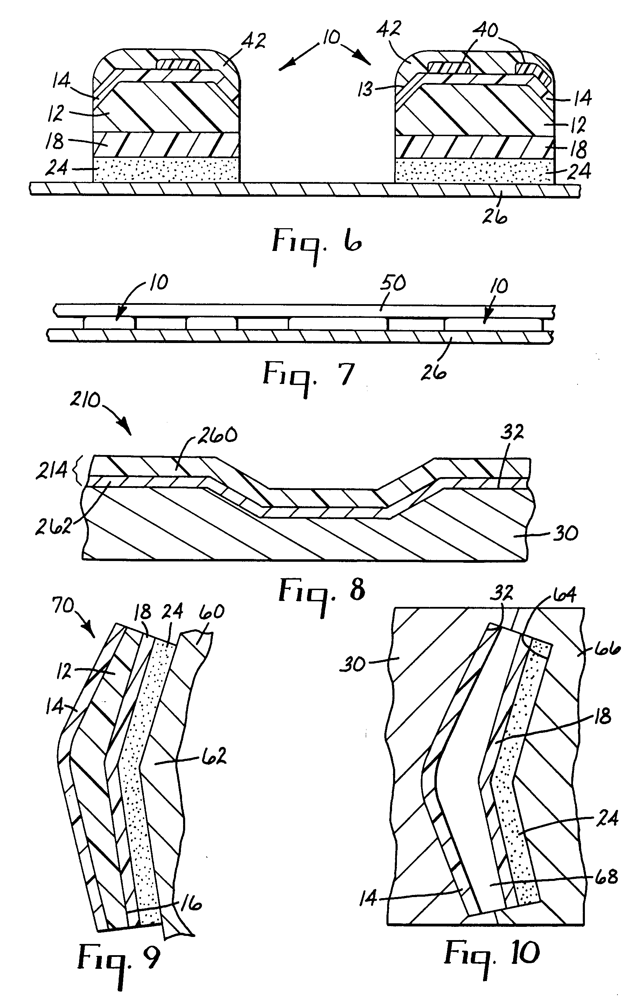

In some instances, it may be desired to provide an article of the invention wherein the mounting surface of the article is not planar. For instance, in an application wherein the article is to be applied over some non-planar feature of the surface of the substrate, such as a protrusion, it may be desired for the mounting surface of the article to be correspondingly shaped in order to achieve a more secure or more aesthetically appealing bond thereto. Figure 9 illustrates article 70 having non-planar mounting surface 16 on which tie layer 18 and adhesive body 24 are conformed such that article 70 can bond more firmly to the substrate, e.g., automobile fender 60 having ridge line 62 running substantially horizontally over a portion thereof.

One manner for providing an article having a non-planar mounting surface is as follows. Figure 10 illustrates an injection molding type process wherein integral film 14 is conformed to shaping surface 32 of mold 30 and tie layer 18 and adhesive body 24 are conformed to second shaping surface 64 of shaping tool 66. Second shaping surface 64 and shaping tool 66 are shaped such that the resultant article will conform well to the ultimate substrate. After integral film 14, and tie layer 18 and adhesive body 24 are conformed to their respective shaping surfaces, mold 30 and shaping tool 66 are brought into contact, providing cavity 68 which is the desired shape of the cured body to be formed. A curable urethane composition (not shown) can then be applied into cavity 68 and cured. After demolding, the resultant article can be applied to a substrate.

As described above, tie layer 18 is compatible with curable composition 12 such that the resultant cured body will be integrally bonded thereto. Tie layers used herein contain amine functionalities. Such tie layers can provide strong bonds to both cured polyurethane bodies as described above and to many adhesives which contain acid functionalities, e.g., many acid-containing acrylic adhesives as discussed below. Tie layers of the invention contain, and may consist essentially of, amine-terminated dimer acid-based thermoplastic polyamide polymers. Typically, sufficient amine functionality is available for bonding to the isocyanate functionalities in the urethane body if the polyamide has an amine value of at least 5, preferably at least 10. As used herein, amine value is determined in accordance with American Standard Testing Method (ASTM) D2073 and represents the number of milligrams of potassium hydroxide equivalent to the basicity of a 1 gram sample of the subject amine material. Polyamides having amine values of over about 25 or 30 may tend to be softer or even somewhat liquid in character at room temperature, thus making them less suitable for use in tie layers of the invention because of reduced effectiveness as a barrier. If such polyamides are used in tie layers of the invention, they are typically used in combination with polyamides having greater film-type cohesiveness and/or blended with higher melting point film-forming polymers. It is believed that primary and secondary amines are preferred as such tie layers will react with the curing urethane to provide the desired bond thereto at optimum reaction rates.

Illustrative examples of commercial polyamide polymers which may be used in tie layers of the invention include MACROMELT 6228 which is believed to have an amine value of about 14, MACROMELT 6239 which is believed to have an amine value of about 5 to 10, and MACROMELT 6240 which is believed to have an amine value of about 10, all of which are available from Henkel Corporation.

Alternatively, polyamide polymers for use in tie layers of the invention could be made as follows. Typically, three major components, i.e., a dimer acid component, a short chain acid component, and diamine, are used, although the polyamide resin may also comprise certain other components.

Suitable dimer acid materials may be obtained as follows. Fatty acids such as are obtained from trees, soybeans, or other vegetable matter are dimerized and then distilled into a series of three fractions. The first or lightest fraction typically contains a high concentration of monomer acid. The next lightest fraction contains a high concentration, e.g., over 90 weight percent, of dimer acid with small amounts of monomer acid and trimer acid. The third fraction typically contains a high concentration of trimer acid. The second, high dimer acid fraction is used to make a tie layer formulation. The dimer acid provides a flexible backbone to the resultant polyamide resin. Fractions containing high concentrations of dimer acid with low amounts of monomer and trimer acid tend to result in polyamides with sharp melting points and high internal strength, thereby making them more convenient to work and imparting higher cohesive integrity to the resultant tie layer. If substantial quantities of trimer acid are present the resultant polyamide typically tends to have a broader, less defined melting point and relatively lower internal strength.

The second major component is short chain acid. The short chain acids modify the characteristics of the fatty acid backbone to increase the melting point of the resultant resin and impart greater stiffness thereto. Illustrative examples of suitable short chain acids include malonic acid, HOOC-(CH₂)-COOH, succinic acid, HOOC-(CH₂)₂-COOH, glutaric acid, HOOC-(CH₂)₃-COOH, adipic acid, HOOC-(CH₂)₄-COOH, and sebaccic acid, HOOC-(CH₂)₈-COOH. The polyamide resin may be made with one or more short chain acids.

The third major component, the diamine component, is typically made up of a combination of short chain amines and longer chain amines. The short chain amines tend to provide strong crosslinking and the longer chain amines tend to impart greater flexibility to the resultant resin. Illustrative examples of short chain amines used herein include ethylene diamine and piperazine. Illustrative of examples of longer chain amines used herein include aminoethyl piperazine and 1,3-di-4-piperidylpropane.

Equivalent weights of the dimer acid and short chain acid components are placed in a reaction kettle and phosphoric acid catalyst and an antioxidant are added. The kettle is then sealed, and while being agitated, heated, e.g., to about 150°C, as the components react. Residual water is distilled off while acid components are condensed back into the kettle. After the water has been removed, the kettle is heated to about 200°C in a nitrogen atmosphere and the amines added in an amount equalining the stoichiometric amount of acids plus sufficient excess thereover tht the resultant polyamide will have the desired amine value. The mixture is then polymerized for about three hours to yield an amine-terminated dimer acid-based thermoplastic polyamide.

Typically, it is preferred that the strengths of the bonds between the tie layer and the cured body and between the tie layer and the adhesive body each exceed the cohesive failure point of the adhesive body. In the case of foam type adhesives whose use herein is discussed below, cohesive failure is often referred as "foam split". In many cases, the tie layer/cured body bond will withstand a 90° peel force at room temperature of at least about 10 pounds/inch-width (17.5 Newtons/centimeter-width), and preferably at least about 25 pounds/inch-width (45 Newtons/centimeter-width).

Tie layer 18 is preferably a monolayer, to minimize points for cohesive failure within an article of the invention, and comprises functionalities which can provide desired bonds to cured body 12 and adhesive body 24. Tie layers containing amine functionalities are useful with curable urethane compositions as described above and are typically useful with adhesive bodies comprising acid functionalities, e.g., acid-containing acrylate adhesive systems. Typically, it is preferred that the tie layer be between about 0.1 and about 1.0 mils (2.5 and 25 microns) thick. In some instances, tie layers having thicknesses outside this range could be used, however, a substantially thinner tie layer may tend to provide insufficient barrier between an incompatible cured body and adhesive body whereas a substantially thicker tie layer may tend to be more subject to cohesive failure and may increase the overall thickness of the molded article undesirably. The tie layer should possess sufficient cohesive integrity and thickness so as to remain a continuous barrier between the curable composition and adhesive body during assembly of the components and curing to form the resultant article.

To facilitate handling of the tie layer for its application to the curable composition or preassembly with the adhesive body, the tie layer may be releasably adhered to a carrier sheet. A carrier sheet, e.g., silicone treated paper, may also be used as a member on which to form the tie layer, e.g., by extrusion or coating of a suitable composition. Figure 3 illustrates optional carrier sheet 37 on bottom major surface 22 of tie layer 18 prior to its removal and application of adhesive body 24 and subsequent curing. Alternatively, the tie layer and adhesive body may be preassembled, e.g., laminated together, and then applied to the mounting surface of the curable composition.

As mentioned above, adhesive bodies used in molded articles of the invention may simply be a single layer of adhesive, e.g., a heat-activated or a pressure-sensitive adhesive, or more complex adhesive bodies may be used. Selection of the adhesive body and its characteristics is made in large part in view of the particular application for which the molded article is being prepared. An advantage of the present invention is that the tie layer permits the use of a variety of adhesive bodies with a number of cured polyurethane bodies.

Preferred adhesives typically contain the acid equivalent of between about 5 and about 15 parts acrylic acid per hundred parts resin to provide a strong bond to the aforementioned tie layers. In some instances, adhesives having acid equivalents outside this range may be used in accordance with the invention.

An illustrative example of pressure-sensitive adhesives typically well-suited for use in the adhesive body of molded articles of the invention is acrylic pressure-sensitive adhesives. Such adhesives typically exhibit excellent high temperature performance and high durability. The acrylic polymers useful in the adhesive bodies of article members of the invention contain at least one alkyl acrylate monomer, preferably a monofunctional unsaturated acrylate ester of non-tertiary alkyl alcohol, the molecules of which have from about 4 to about 14 carbon atoms. Such monomers include, e.g., isooctyl acrylate, 2-ethyl hexyl acrylate, isononyl acrylate, decyl acrylate, dodecyl acrylate, butyl acrylate, and hexyl acrylate. The acrylic polymers preferably contain at least about 60, typically at least 80, parts of the alkyl acrylate monomer. The alkyl acrylate monomers may be used as homopolymers or may be polymerized with at least one polar copolymerizable monomer. Illustrative examples of polar copolymerizable monomers include strongly polar monomers such as acrylic acid, itaconic acid, or hydroxyalkyl acrylates.

Mixtures of the polymerizable monomers used herein may also contain a photoinitiator to induce polymerization of the monomers. Photoinitiators which are useful include the benzoin ethers such as benzoin methyl ether or benzoin isopropyl ether, substituted benzoin ethers such as anisole methyl ether, substituted acetophenones such as 2,2-diethyoxyacetophenone and 2,2-dimethoxy-2-phenylacetophenone, substituted alpha-ketols such as 2-methyl-2-hydroxypropiophenone, aromatic sulfonyl chlorides such as 2-naphthalene sulfonyl chloride, and photoactive oximes such as 1-phenyl-1,1-propanedione-2-(O-ethoxycarbonyl)-oxime. The photoinitiator is typically present in an amount of about 0.01 to about 1 part per hundred parts acrylic monomer resin (phr) of the acrylic monomers.

Where it is desirable for the adhesive to have increased internal strength, a crosslinking agent may also be added to the monomer mixture. Useful acrylate cross-linkers include 1,6-hexanediol diacrylate as well as the multi-functional acrylates disclosed in U.S. Patent No. 4,379,201 (Heilmann et al.), incorporated herein by reference, e.g., trimethylolpropane triacrylate, pentaerythritol tetracrylate, 1,2-ethylene glycol diacrylate, and 1,2-dodecanediol diacrylate. Other useful crosslinking agents include the substituted triazines, such as those disclosed in U.S. Patent Nos. 4,329,384 (Vesley et al.) and 4,330,590 (Vesley), both incorporated herein by reference, e.g., 2,4-bis(trichloromethyl)-6-(3,4-methoxyphenyl-s-triazine) and other chromophore halomethyl-5-triazines. When used, the crosslinking agent is typically present in an amount of about 0.01 to about 1 phr.

In a highly preferred embodiment, the pressure-sensitive adhesive body is a foam-like layer, e.g., a monomer blend comprising microspheres may be used. The microspheres may be glass or polymeric. The microspheres should have an average diameter of about 10 to about 200 micrometers, and comprise from about 5 to about 65 volume percent of the core layer. Typically, the thickness of foam-like layers in articles of the invention ranges from about 0.15 to about 3.0 millimeters in thickness with the foam in low profile embodiments of the invention, typically being about 0.15 to about 0.75 millimeters in thickness. In other embodiments, foam-like layers having thickness outside this range may be preferred. Foam-type adhesive systems typically provide excellent adhesive performance including high shear strength and the ability to conform to irregular surfaces without impairment of the adhesive bond.

Examples of polymeric microspheres are described in U.S. Patent Nos. 3,615,972 (Morehouse et al) and 4,287,308 (Nakayam et al.). Such microspheres are available from Kema Nord Plastics under the trade name EXPANCEL and from Matsumoto Yushi Seiyaku under the trade name MICROPEARL.

Preferred glass microspheres have average diameters of about 50 micrometers. When glass microspheres are used, the pressure-sensitive adhesive layer should be at least 3 times as thick as their diameter, preferably at least 7 times.

Where colored articles are desired, the glass microspheres may be coated with organic thin-film coatings such as those disclosed in U.S. Patent Nos. 4,612,242 (Vesley et al.), 4,618,525 (Chamberlain et al.), or by forming the glass microbubbles from stained glass as disclosed in U.S. Patent Nos. 4,666,771 (Vesley et al.) and 4,789,491 (Vesley at al.) or, the articles may be made according to U.S. Patent No. 4,748,061 (Vesley).

In another useful embodiment, the pressure-sensitive adhesive is a cellular pressure-sensitive adhesive membrane comprising from about 15 percent to about 85 percent voids as disclosed in U.S. Patent 4,415,615 (Esmay et al.). Typical cellular pressure-sensitive adhesives have good flexibility and good adhesion to rough surfaces.

Other useful materials which can be blended into the adhesive layer include, but are not limited to, fillers, pigments, plasticizers, tackifiers, fibrous reinforcing agents, foaming agents, antioxidants, stabilizers, fire retardants, and viscosity adjusting agents.

Another useful filler material is hydrophobic silica as disclosed in U.S. Patents No. 4,710,536 (Klingen et al.) and 4,749,590, (Klingen et al.), both of which are incorporated herein by reference. In one preferred embodiment of the present invention, the pressure-sensitive adhesive layer further comprises from about 2 to about 15 phr of a hydrophobic silica having a surface area of at least 10 meter²/gram.

In some embodiments, the adhesive body may exhibit heat-activated characteristics. When utilizing such adhesive bodies, care should be taken that some other element of the article, e.g., an integral film, is not damaged when the adhesive is heated. One method for adhering such articles is to heat the substrate to a temperature sufficient to heat the adhesive to activate the adhesive. In many cases, the adhesive can be heated sufficiently by conduction from the heated substrate for activation, but the heat will dissipate sufficiently so as to not damage other elements of the article.

Solution cast adhesives may also be used in some embodiments of the invention. For instance, acrylate pressure-sensitive adhesives produced by traditional solution coating techniques containing up to about 20 weight percent acid-functionality may be used herein. Illustrative examples of such include AROSET 1845 and 1930 Adhesives from Ashland Chemical Company and DUROTACK 80-1077 from National Starch Corporation. Some applications for articles of the invention may require higher static shear performance than is provided by many solution cast adhesives.

Depending in part upon how the resultant article is mounted on a substrate and the shape of the article itself, some portions of the adhesive body may be readily visible after the article is adhered to a substrate. If the article is being used for decorative purposes, the visible portions of the adhesive body may be considered unsightly. Accordingly, the adhesive body may be colored in some manner, such as a neutral color or a color coordinating with the color of the substrate or appearance of the article. Illustrative examples of techniques for imparting desired color to the visible portions of the adhesive bodies include incorporating coloring agents such as pigments, dyes, etc. therein, and coloring or selecting colored versions of other elements of the adhesive body, e.g., the aforementioned microspheres.

Referring again to Figure 5, in many instances, depending in part upon the characteristics of adhesive body 24, protective release liner 26 is applied to protect exposed or functional side 27 thereof, i.e., the side which is contacted and adhered to a substrate (not shown) such as an automobile body panel.

As desired, further features may be added to a decorative article of the invention. If desired, the front side of the integral film may be decorated in a number of other ways to provide the aesthetic properties desired for a given application. Figure 6 illustrates a decorative molded article of the invention wherein decorative image 40 was applied to front surface 13 of integral film 14, such as by screen printing one or more colored inks thereon. It will typically be preferred to select inks which will achieve a secure bond to front surface 13. If desired, such decorative images 40 may be formed by other methods, including, but not limited to, electroplating, painting, sputtering, vapor coating, etc. As is also illustrated in Figure 6, clear coat 42 may be applied to front surface 13 of integral film 14. Clear coat 42 may be applied over decorative image 40 as shown, or in some embodiments (not shown), may be applied to a front surface 13 not having a decorative image thereon.

Another optional feature of some embodiments of the invention as illustrated in Figure 6 is that decorative articles formed herein may be trimmed, e.g., die cut or kiss cut. For instance, a group of letters may be formed at once in connected form to maintain desired registration, e.g., from a single integral film and urethane body, and then be trimmed to provide discrete elements. If the resultant elements are to be arranged in defined registration with each other, it is typically preferred that any trimming be done on a carrier, such as liner 26, which can provide means for maintaining the elements in desired arrangement.

A decorative image may also be added by first placing decorative elements in the mold. For instance, characters adapted to adhere to the integral film may be placed in mold prior to conforming the integral film therein.

Figure 7 illustrates one manner of applying decorative articles of the invention to a substrate wherein decorative articles 10 are held in desired registration on carrier liner 26. Application tape 50 is used to lift elements 10 from carrier liner 26 and apply them to a desired substrate (not shown), e.g., an automobile body panel, in desired registration.

Another optional feature is to make urethane bodies with varying thickness such as articles having thin extensions or flaps on one or more sides and thicker middle portions. In some instances the middle portions may be rigid because of the thickness of the urethane body at that point, while the flaps are flexible, thereby permitting them to be wrapped around a ledge or structural member of the substrate for decorative and/or mounting purposes. In other embodiments, the thin portion may be near the middle of the body such as to make it more conformable. Such articles can be made either with or without an integeral film.

Still another optional feature is to incorporate skid-resistant particles in the curable composition of a three dimensional article made without an integral film. The resultant three dimensional article can be used as sill plates or threshold floor molding to improve traction and safety.

### Examples

The invention will be further explained by the following illustrative examples which are intended to be nonlimiting. Unless otherwise indicated, all amounts are expressed in parts by weight. The results of these tests in each example and comparative example are tabulated in Table I below.

Unless otherwise indicated, the following test methods were used.

### 90° Peel Adhesion - Short Term

A test sample about 1.2 centimeters in width was produced as described below and hand applied to a 5 centimeters by 15 centimeters by 0.16 centimeter anodized aluminum test panel test panel, and rolled down once with a 15 pound (6.8 kilogram) roller at a rate of 12 inches/minute (30 centimeter/minute). The prepared sample was then conditioned for 20 minutes at room temperature and 30 to 70 percent relative humidity ("RH"). The 90° peel strength was then measured with constant extension rate tensile tester, such as an INSTRON Model 1122, at a peel rate of about 12 inches/minute (30 centimeters/minute). The peel strength was recorded in pounds per 1.2 centimeters-width and probable mode of failure noted. These results are reported herein as 90° Peel-ST ("short term").

### 90° Peel Adhesion - Long Term

A test sample was evaluated as in the 90° Peel Adhesion-Short Term test except that after being applied to the anodized aluminum test panel, the prepared sample was conditioned for 1 week at a temperature of about 158°F (70°C) at uncontrolled humidity before measuring adhesion. The peel strength was recorded in pounds per 1.2 centimeters-width and probable mode of failure noted. These results are reported herein as 90° Peel-LT ("long term").

### Static Shear

A 1.2 centimeters wide sample of an article of the invention was adhered to an anodized aluminum test panel like that described in the aforementioned 90° Peel test. The sample was adhered by applying a SCOTCHWELD Brand Epoxy No. B/A 1838, an epoxy adhesive from 3M, to the front side of the article, e.g., the integral film, and contacting to the test panel. The composite was allowed to dwell overnight under a 1 kilogram weight in order to ensure a strong bond therebetween. The adhesive body side of the article was then contacted to a second test panel and allowed to dwell under a 1 kilogram weight for 20 minutes to provide an adhesive bond size of 1.2 by 2.5 centimeters. The assembly was then mounted in an oven at 70°C in a vertical plane, suspended from the upper edge of one panel and a 0.5 kilogram mass attached to the extended tape edge. The time at which the mass fell was the failure value and is reported in minutes. If the sample had not failed after 10,000 minutes, the test was ended.

### Example 1

A vacuum mold was prepared with a shaping surface in the form of a rectangle about 1.2 centimeters by 30.5 centimeters by 0.13 centimeter.

A film was formed from the following composition:

| Amount | Component |
|---|---|
| 36.5 | GEON 178 - polyvinyl chloride resin, from B.F. Goodrich; |
| 11.7 | PLASTOLEEN 9776 - polyester plasticizer, from Nuodex Chemical Company; |
| 1.8 | FERRO 5444 - heat stabilizer, from Ferro Corporation, with ligands of barium, cadmium, and zinc; |
| 21.6 | Diisobutyl ketone; |
| 21.6 | Xylene; |
| 1.8 | UVINOL N539 - ultraviolet radiation absorber, from Ciba-Geigy; and |
| 5.0 | RAVEN 1200 - carbon black, from City Service, Inc. |

The composition was sandmilled for about five minutes to fineness of grind of 6.0 on the PC scale and then applied at a wet thickness of about 100 microns onto a polyester casting liner treated for release. The solvent was removed by heating at about 95°C for about 120 seconds and then at about 140°C for about 40 seconds. The resin was then fused by heating at about 190°C for about 30 seconds to yield a 2 mil (50 microns) thick PVC film.

The film was then primed on its back side by knife coating a 15 percent by weight solution of VAGH, a polyvinyl chloride/polyvinyl acetate resin, in equal parts of cyclohexanone and methyl ethyl ketone onto the surface thereof. The coating was dried for about 2 minutes at about 150°C to remove substantially all of the solvent and yield a dry coating thickness of about 10 microns.

After removing the casting liner, the primed film was intimately conformed to the shaping surface of the mold which was heated to a temperature of about 60°C, with the front or unprimed side of the film being in contact with the mold. The film was also being heated with quartz lamps. A vacuum was applied through the mold, thereby causing the film to intimately conform thereto.

A curable two part, polyurethane composition was prepared with 1.0 parts of (A), which was 99.7 parts of 5901-300 polyol from Inolex Chemical Company, a polyester polyol cross-linked with dipropylene glycol phthalate adiapate and having a hydroxyl number of 305, and 0.3 parts of dibutyl tin dilaurate catalyst, and 1.15 parts of (B), which was 100 parts of DESMODUR N-100, an aliphatic polyisocyanate based on hexamethylene diisocyanate and having an equivalent weight of 191, available from Mobay Chemical Company.

The cavities in the conformed film were filled with the curable composition, and a tie layer on a paper liner applied thereover. The tie layer was a thin film of MACROMELT 6239, an amine-terminated dimer acid-based thermoplastic polyamide available from Henkel, coated in a 30 weight percent solution in toluene/isopropanol mixture to a wet thickness of about 3 mils (75 microns) and dried to yield a dry thickness of about 0.9 mils (22 microns).

A foam adhesive body was prepared as follows. An ultraviolet (UV) photopolymerizable mixture containing:

| Amount | Component |
|---|---|
| 87.5 | Isooctyl acrylate (IOA); |
| 12.5 | Acrylic acid (AA); and |
| 0.04 | KB-1, a 2,2-dimethoxy-2-phenyl-acetophenone, from Sartomer; |

was partially polymerized in an inert atmosphere under UV radiation to provide a coatable syrup having a Brookfield viscosity of about 3000 centipoise. To this syrup was then added the following:

| Amount | Component |
|---|---|
| 8.0 | C-15/250, glass microbubbles from 3M; |
| 2.0 | AEROSIL R-972, a hydrophobic fumed silica, from Degussa; |
| 0.1 | IRGACURE 651; |
| 0.055 | 1,6-hexanedioldiacrylate (HDDA), crosslinker; and |
| 0.43 | PENNCO 9B117, 18 weight percent carbon black in acrylate from Penn Color, Inc. |

The composition was coated on a 0.05 millimeter thick biaxially-oriented polyethylene terephthalate (PET) film, and covered with a second PET film, the facing surfaces of which having a low adhesion release coating thereon, placed under UV lamps, and exposed through the PET film at a total energy of about 400 millijoules/centimeter².

The adhesive body which had a final thickness of about 10 mils (250 microns) was then applied over the tie layer.

The urethane composition was then subsequently cured at about 130°F (55°C) for about 3 minutes.

After demolding the resultant article was tested and found to provide a static shear of over 10,000 minutes. The 90° Peel-ST was about 13.7 pounds per 1.2 centimeter-width and 90° Peel-LT was about 10.3 pounds per 1.2 centimeter-width with failure in both instances appearing to be cohesive failure within the adhesive body.

### Example 2

An article was made as in Example 1 except the adhesive was a UV-polymerized isooctyl acrylate/acrylic acid copolymer (90/10 weight ratio) containing about 0.1 parts per hundred parts acrylic resin each of 2,4-bis(trichloromethyl)-6-(4- methoxyphenyl-s-triazine) as crosslinker, and 2,2-dimethoxy-2-phenylacetophenone as initiator about 5 mils (125 microns) in thickness which was exposed at a total energy of about 350 millijoules/centimeter².

After demolding the resultant article was tested and found to provide a static shear of over 10,000 minutes. The 90° Peel-ST was about 11.6 pounds per 1.2 centimeter-width and 90° Peel-LT was about 9.4 pounds per 1.2 centimeter-width with failure in both instances appearing to be cohesive failure within the adhesive body.

### Example 3

An article was made as in Example 2 except the tie layer was made using MACROMELT 6228 instead of MACROMELT 6239.

After demolding the resultant article was tested and found to provide a static shear of over 10,000 minutes. The 90° Peel-ST was about 11.3 pounds per 1.2 centimeter-width and 90° Peel-LT was about 9.0 pounds per 1.2 centimeter-width with failure in both instances appearing to be cohesive failure within the adhesive body.

### Example 4

An article was made as in Example 2 except the tie layer was made using MACROMELT 6240 instead of MACROMELT 6239.

After demolding the resultant article was tested and found to provide a static shear of over 10,000 minutes. The 90° Peel-ST was about 11.2 pounds per 1.2 centimeter-width and 90° Peel-LT was about 9.2 pounds per 1.2 centimeter-width with failure in both instances appearing to be cohesive failure within the adhesive body.

### Example 5

An article was made as in Example 2 except the tie layer was made using MACROMELT 6301 instead of MACROMELT 6239.

After demolding the resultant article was tested and found to provide a static shear of over 10,000 minutes. The 90° Peel-ST was about 12.9 pounds per 1.2 centimeter-width and 90° Peel-LT was about 11.9 pounds per 1.2 centimeter-width with failure in both instances appearing to be cohesive failure within the adhesive body.

### Comparative Example A

An article was made as in Example 2 except the tie layer was made using MACROMELT 6238, an acid-terminated dimer acid-based polyamide, instead of MACROMELT 6239.

After demolding the resultant article was tested and found to provide a static shear of about 1,000 minutes. The 90° Peel-ST was about 11.3 pounds per 1.2 centimeter-width and 90° Peel-LT was about 8.1 pounds per 1.2 centimeter-width with failure in both instances appearing to be delamination between the adhesive body and the tie layer.

### Comparative Example B

An article was made as in Example 2 except no tie layer was used.

After demolding the resultant article was observed to have bubbled areas of trapped gas between the adhesive body and cured urethane body. No evidence of outgassing had been detected in any of Examples 1-5 or Comparative Example A. When the samples were prepared for testing, the gas appeared to be forced out when the samples were rolled down onto the test panels. When tested, the article was found to provide a static shear of over 10,000 minutes. The 90° Peel-ST was about 4.7 pounds per 1.2 centimeter-width, and a 90° Peel-LT of about 4.5 pounds per 1.2 centimeter width with failure in both instances being delamination between the cured urethane body and the adhesive body.

**Table I**

| 90° Peel Adhesion | | | | |
|---|---|---|---|---|
| Example | Shear¹ | ST² | LT³ | Failure⁴ |
| 1 | 10 | 13.7 | 10.3 | Adhesive cohesive split |
| 2 | 10 | 11.6 | 9.4 | Adhesive cohesive split |
| 3 | 10 | 11.3 | 9.0 | Adhesive cohesive split |
| 4 | 10 | 11.2 | 9.2 | Adhesive cohesive split |
| 5 | 10 | 12.9 | 11.9 | Adhesive cohesive split |
| A | 1 | 11.3 | 8.1 | Delamination between tie layer and adhesive body |
| B | 10 | 4.7 | 4.5 | Delamination between adhesive body and urethane body |

| | | | | |
|---|---|---|---|---|
| ¹ In thousands of minutes. | | | | |
| ² Short term in pounds per 1.2 centimeters-width | | | | |
| ³ Long term in pounds per 1.2 centimeters-width | | | | |
| 4 Location of failure during peel adhesion testing | | | | |

## Claims

1. A three dimensional article adapted to be bonded to a substrate, characterized in that said article comprises:
1) a cured polyurethane body having a mounting surface, said cured body containing isocyanate functionalities;
2) a tie layer having a top and a bottom major surface, said tie layer containing amine functionalities and said top major surface being bonded to said mounting surface of said cured body; and
3) an adhesive body, at least the top stratum of which contains acid functionalities, adhered to said bottom major surface of said tie layer;
wherein said cured body was cured with said tie layer and said adhesive body in situ.

2. The article of claim 1 further characterized in that said tie layer comprises an amine-terminated dimer acid-based thermoplastic polyamide.

3. The article of claim 1 further characterized in at least one of the following:
1) said adhesive body comprises at least one of the following: a pressure-sensitive adhesive layer, a heat-activated adhesive layer, or a foam adhesive layer; or
2) said adhesive body contains at least one of the following: coloring agents, fillers, plasticizers, tackifiers, fibrous reinforcing agents, foaming agents, antioxidants, stabilizers, fire retardants, or viscosity adjusting agents; or
3) said adhesive body comprises a foam adhesive tape having a thickness between about 0.15 and about 0.75 millimeters.

4. The article of claim 1 further characterized in that said article further comprises an integral film having a front side and a back side, wherein said back side of said film is intimately bonded to at least a portion of said cured body, said film substantially not covering said mounting surface of said body.

5. The article of claim 4 further characterized in at least one of the following:
1) said article further comprises a clear coat over at least a portion of the front surface of said integral film; or
2) said article further comprises a decorative image on the front side of said integral film; or
3) said integral film comprises one of the following: polyvinyl chloride, polyolefin, thermoplastic rubber, acrylonitrile-butadiene- styrene/vinyl laminate, or ethylene/methacrylic acid copolymer; or
4) said integral film contains one or more of the following: plasticizers, protective agents, colorants, reinforcing agents, fillers, or fire retardants; or
5) said integral film is partially cross-linked and comprises a metallic coating on the top side thereof.

6. The article of claim 1 further characterized in that said cured body is not of uniform thickness.

7. A process for forming a three dimensional article adapted to be adhered to a substrate, characterized in that said process comprises:
1) providing a mold having a desired contour defined by a shaping surface;
2) applying a curable urethane composition into said mold, said composition flowing to assume the shape defined by said shaping surface, said composition containing isocyanate functionalities;
3) applying a tie layer having a top and a bottom major surface over said applied curable composition with said top major surface of said tie layer in contact with said curable composition, said tie layer containing amine functionalities; and
4) placing an adhesive body in direct contact with said bottom major surface of said tie layer, wherein at least the top stratum of said adhesive body contains acid functionalities; then
5) curing said composition with said tie layer and said adhesive body in situ to form an article adapted to be adhered to a substrate; and
6) demolding said article.

8. The process of claim 7 further characterized in that said tie layer comprises an amine-terminated dimer acid-based thermoplastic polyamide.

9. The process of claim 7 further characterized in that said process further comprises conforming a film having a front side and a back side to said shaping surface of said mold prior to applying said curable composition hereto, said front side of said film being in contact with said shaping surface, said back side of said film adapted to bond to said curable composition when said composition is cured such that said film becomes an integral film.

10. The process of claim 9 further characterized in at least one of the following:
1) said film comprises one of the following: polyvinyl chloride, polyolefin, thermoplastic rubber, acrylonitrile-butadiene-styrene/vinyl laminte, or ethylene/methacrylic acid copolymer; or
2) said film contains one or more of the following: plasticizers, protective agents, colorants, reinforcing agents, fillers, or fire retardants.

11. The process of claim 7 further characterized in at least one of the following:
1) said adhesive body comprises at least one of the following: a pressure-sensitive adhesive layer, a heat-activated adhesive layer, or a foam adhesive system; or
2) said adhesive body contains at least one of the following: coloring agents, fillers, plasticizers, tackifiers, fibrous reinforcing agents, foaming agents, antioxidants, stabilizers, fire retardants, or viscosity adjusting agents.

12. The process of claim 7 further characterized in that said process further comprises at least one of the following:
1) trimming said decorative article; or
2) placing decorative elements in said mold prior to application of said curable composition thereto; or
3) applying a clear coat to at least a portion of the front surface of said cured body or to the front surface of the integral film if any after demolding said article.

13. The process of claim 7 further characterized in at least one of the following:
1) said mounting surface is not planar; or
2) said urethane body is not of uniform thickness.

## Patentansprüche

1. Dreidimensionaler Artikel zum Aufkleben auf ein Substrat, dadurch gekennzeichnet, daß der Artikel aufweist:
1) einen gehärteten Polyurethan-Körper mit einer Befestigungsfläche, wobei dieser gehärtete Körper Isocyanat-Funktionalitäten aufweist;
2) eine Bindeschicht mit einer oberen und einer unteren größeren Oberfläche, wobei die Bindeschicht Amin-Funktionalitäten aufweist und die obere größere Oberfläche mit der Befestigungsfläche des gehärteten Körpers verklebt ist; und
3) einen Klebstoffkörper, wobei mindestens dessen obere Lage Säure-Funktionalitäten enthält, adhäriert an der größeren unteren Oberfläche der Bindeschicht;
wobei der gehärtete Körper mit der Bindeschicht und dem Klebstoffkörper in situ-gehärtet wurde.

2. Artikel nach Anspruch 1, ferner dadurch gekennzeichnet, daß die Bindeschicht ein thermoplastisches Polyamid auf Basis einer Amin-terminierten Dimersäure umfaßt.

3. Artikel nach Anspruch 1, ferner dadurch gekennzeichnet, daß der Klebstoffkörper mindestens
1) eine Haftklebstoffschicht oder eine wärmeaktivierbare Klebstoffschicht oder eine Schaumklebstoffschicht aufweist; oder
2) Farbmittel, Füllstoffe, Weichmacher, Klebrigmacher, faserige Verstärkungsmittel, Treibmittel, Antioxidantien, Stabilisiermittel, Flammschutzmittel oder Viskositätsregler enthält; oder
3) ein Schaumstoffklebeband mit einer Dicke zwischen etwa 0,15 mm und etwa 0,75 mm umfaßt.

4. Artikel nach Anspruch 1, ferner aufweisend eine Integralfolie mit einer Vorderseite und einer Rückseite, wobei die Rückseite der Folie mindestens mit einem Teil des gehärteten Körpers fest verklebt ist und die Folie die Befestigungsfläche des Körpers im wesentlichen nicht bedeckt.

5. Artikel nach Anspruch 4, ferner dadurch gekennzeichnet, daß
1) der Artikel ferner eine durchsichtige Beschichtung über mindestens einen Teil der Vorderseite der Integralfolie aufweist; oder
2) der Artikel ferner ein Dekorbild auf der Vorderseite der Integralfolie aufweist; oder
3) die Integralfolie mindestens umfaßt: Polyvinylchlorid, Polyolefin, thermoplastisches Elastomer, Acrylnitril-Butadien-Styrol/Vinyl-Laminat oder Ethylen/Methacrylsäure-Copolymer; oder
4) die Integralfolie einen oder mehrere der folgenden enthält: Weichmacher, Schutzmittel, Farbmittel, Verstärkungsmittel, Füllstoffe oder Flammschutzmittel; oder
5) die Integralfolie teilweise vernetzt ist und eine metallische Beschichtung auf ihrer Oberseite aufweist.

6. Artikel nach Anspruch 1, ferner dadurch gekennzeichnet, daß der gehärtete Körper keine gleichförmige Dicke hat.

7. Verfahren zum Erzeugen eines dreidimensionalen Artikels zum Adhärieren auf ein Substrat, welches Verfahren umfaßt:
1) Bereitstellen einer Form mit einer angestrebten, durch eine formgebende Oberfläche festgelegten Kontur;
2) Einbringen einer härtbaren Urethan-Zusammensetzung in die Form, wobei die Zusammensetzung fließend ist, um die durch die formgebende Oberfläche festgelegte Gestalt anzunehmen, welche Zusammensetzung Isocyanat-Funktionalitäten aufweist;
3) Aufbringen einer Bindeschicht mit einer mit einer oberen und einer unteren größeren Oberfläche über der eingebrachten härtbaren Zusammensetzung mit der oberen größeren Oberfläche der Bindeschicht im Kontakt mit der härtbaren Zusammensetzung, welche Bindeschicht Amin-Funktionalitäten enthält; und
4) Auflegen eines Klebstoffkörpers im direkten Kontakt mit der unteren größeren Oberfläche der Bindeschicht, wobei mindestens die obere Lage des Klebstoffkörpers Säure-Funktionalitäten enthält; sodann
5) Härten der Zusammensetzung mit der Bindeschicht und dem Klebstoffkörpers in situ, um einen Artikel zum Adhärieren auf einem Substrat zu erzeugen; und
6) Entformen des Artikels.

8. Verfahren nach Anspruch 7, ferner dadurch gekennzeichnet, daß die Bindeschicht ein thermoplastisches Polyamid auf Basis einer Amin-terminierten Dimersäure umfaßt.

9. Verfahren nach Anspruch 7, welches Verfahren ferner konturgetreues Anlegen einer eine Vorderseite und eine Rückseite aufweisenden Folie an der formgebenden Oberfläche der Form umfaßt, bevor darin die härtbare Zusammensetzung eingebracht wird, wobei die Vorderseite der Folie in Kontakt mit der formgebenden Oberfläche ist und die Rückseite der Folie mit der härtbaren Zusammensetzung verklebt werden soll, wenn die Zusammensetzung gehärtet ist, so daß aus der Folie eine Integralfolie wird.

10. Verfahren nach Anspruch 9, ferner dadurch gekennzeichnet, daß die Folie
1) mindestens umfaßt: Polyvinylchlorid, Polyolefin, thermoplastisches Elastomer, Acrylnitril-Butadien-Styrol/Vinyl-Laminat oder Ethylen/Methacrylsäure-Copolymer; oder
2) einen oder mehrere der folgenden enthält: Weichmacher, Schutzmittel, Farbmittel, Verstärkungsmittel, Füllstoffe oder Flammschutzmittel.

11. Verfahren nach Anspruch 7, ferner dadurch gekennzeichnet, daß der Klebstoffkörper mindestens
1) eine Haftklebstoffschicht oder eine wärmeaktivierbare Klebstoffschicht oder eine Schaumklebstoffschicht aufweist; oder
2) Farbmittel, Füllstoffe, Weichmacher, Klebrigmacher, faserige Verstärkungsmittel, Treibmittel, Antioxidantien, Stabilisiermittel, Flammschutzmittel oder Viskositätsregler enthält.

12. Verfahren nach Anspruch 7, welches Verfahren mindestens umfaßt:
1) Besäumen des Dekorartikels; oder
2) Einlegen von Dekorartikeln in die Form vor dem Einbringen der härtbaren Zusammensetzung darin; oder
3) Aufbringen einer durchsichtigen Beschichtung auf mindestens einen Teil der Vorderseite des gehärteten Körpers oder, sofern vorhanden, auf der Vorderseite der nach dem Entformen des Artikels.

13. Verfahren nach Anspruch 7, ferner dadurch gekennzeichnet, daß
1) die Befestigungsfläche nicht planar ist oder
2) der Urethan-Körper nicht gleichförmig dick ist.

## Revendications

1. Article tridimensionnel adapté pour être fixé à un substrat, caractérisé en ce que ledit article comprend:
1) un corps de polyuréthane durci ayant une surface de montage, ledit corps durci contenant des fonctionnalités isocyanate;
2) une couche de fixation ayant une surface majeure supérieure et une surface majeure inférieure, ladite couche de fixation contenant des fonctionnalités amine et ladite surface majeure supérieure étant fixée à ladite surface de montage dudit corps durci; et
3) un corps adhésif, dont au moins la strate supérieure contient des fonctionnalités acide, adhérant à ladite surface majeure inférieure de ladite couche de fixation;
où ledit corps durci a été durci avec ladite couche de fixation et ledit corps adhésif in situ.

2. Article de la revendication 1, caractérisé en outre en ce que ladite couche de fixation comprend un polyamide thermoplastique à base d'acide dimère à terminaison amine.

3. Article de la revendication 1, caractérisé en outre par au moins un des traits suivants:
1) ledit corps adhésif comprend au moins un des éléments suivants: une couche adhésive sensible à la pression, une couche adhésive activée à la chaleur, ou une couche adhésive en mousse; ou
2) ledit corps adhésif contient au moins un des éléments suivants: agents colorants, charges, plastifiants, agents collants, agents de renforcement fibreux, agents moussants, antioxydants, stabilisateurs, agents ignifuges, ou agents d'ajustement de la viscosité; ou
3) ledit corps adhésif comprend un ruban adhésif en mousse ayant une épaisseur comprise entre environ 0,15 et environ 0,75 millimètres.

4. Article de la revendication 1, caractérisé en outre en ce que ledit article comprend en outre une pellicule solidaire ayant un côté frontal et un côté arrière, où ledit côté arrière de ladite pellicule est intimement lié à au moins une partie dudit corps durci, ladite pellicule ne couvrant pas sensiblement ladite surface de montage dudit corps.

5. Article de la revendication 4, caractérisé en outre par un des éléments suivants:
1) ledit article comprend en outre un revêtement clair sur au moins une partie de la surface frontale de ladite pellicule solidaire; ou
2) ledit article comprend en outre une image décorative sur le côté frontal de ladite pellicule solidaire; ou
3) ladite pellicule solidaire comprend au moins un des corps suivants: chlorure de polyvinyle, polyoléfine, caoutchouc thermoplastique, stratifié acrylonitrile-butadiène-styrène/vinyle ou copolymère éthylène/acide méthacrylique; ou
4) ladite pellicule solidaire contient un ou plusieurs des corps suivants: plastifiants, agents protecteurs, colorants, agents de renforcement, charges ou agents ignifuges; ou
5) ladite pellicule solidaire est partiellement réticulée et comprend un revêtement métallique sur son côté supérieur.

6. Article de la revendication 1, caractérisé en outre en ce que ledit corps durci n'est pas d'épaisseur uniforme.

7. Procédé pour former un article tridimensionnel adapté pour adhérer à un substrat, caractérisé en ce que ledit procédé comprend:
1) la fourniture d'un moule ayant un contour désiré défini par une surface de façonnage;
2) l'application d'une composition d'uréthane durcissable dans ledit moule, ladite composition s'écoulant pour prendre la forme définie par ladite surface de façonnage, ladite composition contenant des fonctionnalités isocyanate;
3) l'application d'une couche de fixation ayant une surface majeure supérieure et une surface majeure inférieure sur ladite composition durcissable appliquée, ladite surface majeure supérieure de ladite couche de fixation étant en contact avec ladite composition durcissable, ladite couche de fixation contenant des fonctionnalités amine; et
4) la mise en place d'un corps adhésif en contact direct avec ladite surface majeure inférieure de ladite couche de fixation, où au moins la strate supérieure dudit corps adhésif contient des fonctionnalités acides; puis
5) le durcissement de ladite composition avec ladite couche de fixation et ledit corps adhésif in situ pour former un article adapté pour adhérer à un substrat; et
6) le démoulage dudit article.

8. Procédé de la revendication 7, caractérisé en outre en ce que ladite couche de fixation comprend un polyamide thermoplastique à base d'acide dimère à terminaison amine.

9. Procédé de la revendication 7, caractérisé en outre en ce que ledit procédé comprend en outre la conformation d'une pellicule ayant une surface frontale et une surface arrière à ladite surface de façonnage dudit moule avant l'application de ladite composition durcissable, ledit côté frontal de ladite pellicule étant en contact avec ladite surface de façonnage, ledit côté arrière de ladite pellicule étant adapté pour se fixer à ladite composition durcissable lorsque ladite composition est durcie de manière que ladite pellicule devienne une pellicule solidaire.

10. Procédé de la revendication 9 , caractérisé en outre par au moins un des traits suivants:
1) ladite pellicule comprend au moins l'un des corps suivants:chlorure de polyvinyle, polyoléfine, caoutchouc thermoplastique, stratifié acrylonitrile-butadiène-styrène/vinyle, ou copolymère éthylène/acide méthacrylique; ou
2) ladite pellicule contient au moins un des corps suivants: plastifiants, agents protecteurs, colorants, agents de renforcement, charges ou agents ignifuges.

11. Procédé de la revendication 7, caractérisé en outre par au moins un des traits suivants:
1) ledit corps adhésif comprend au moins un des corps suivants: une couche adhésive sensible à la pression, une couche adhésive activée à la chaleur, ou un système adhésif en mousse; ou
2) ledit corps adhésif contient au moins un des corps suivants: agents colorants, charges, plastifiants, agents collants, agents de renforcement fibreux, agents moussants, antioxydants, stabilisateurs, agents ignifuges, ou agents d'ajustement de la viscosité.

12. Procédé de la revendication 7, caractérisé en outre en ce que ledit procédé comprend en outre un des traits suivants:
1) parage dudit article décoratif; ou
2) mise en place d'éléments décoratifs dans ledit moule avant application de ladite composition durcissable; ou
3) application d'un revêtement clair sur au moins une partie de la surface frontale dudit corps durci ou à la surface frontale de la pellicule solidaire s'il y en a après démoulage dudit article.

13. Procédé de la revendication 7, caractérisé en outre par au moins un des traits suivants:
1) ladite surface de montage n'est pas plane; ou
2) ledit corps uréthane n'est pas d'une épaisseur uniforme.
